# FASCICULE DE BREVET EUROPEEN

(11) **EP 0 822 695 B1**
(45) Date de publication et mention de la délivrance du brevet: **16.03.2005**
(21) Numéro de dépôt: 97202135.6
(22) Date de dépôt: 11.07.1997
(51) Int. Cl.: H04M 1/66

(54) **Téléphone avec mode de fonctionnement restreint**
Fernsprechapparat mit einer begrenzten Betriebsart
Telephone with a restricted operation mode

(30) Priorité: 31.07.1996 FR 9609638
(43) Date de publication de la demande: 04.02.1998
(73) Titulaire: Koninklijke Philips Electronics N.V., 5621 BA Eindhoven (NL)
(72) Inventeur: André, Jean-Marie, 75008 Paris (FR)
(74) Mandataire: Landousy, Christian

(56) Documents cités:
- EP-A- 0 354 367
- US-A- 4 866 764
- US-A- 4 945 556
- US-A- 5 140 632
- US-A- 5 365 570

## Description

L'invention concerne un équipement téléphonique comportant un téléphone doté d'un clavier à touches et susceptible de fonctionner selon un mode de fonctionnement restreint, des moyens pour associer un code secret audit mode de fonctionnement restreint, et des moyens pour rendre le passage du mode de fonctionnement restreint au mode de fonctionnement normal tributaire de la saisie préalable dudit code secret.

L'invention a d'importantes applications notamment dans le domaine de la téléphonie sans fil et de la téléphonie mobile.

Le brevet américain US4,945,556 décrit une méthode pour verrouiller certaines fonctions d'un système de téléphone mobile (appels locaux, appels longue distance, réponse aux appels). Le déverrouillage se fait par saisie d'un code secret.

La demande de brevet EP0354367 décrit un téléphone dont le clavier peut être recouvert d'un cache amovible comportant des touches. Lorsque le cache est en place sur le clavier du téléphone, le téléphone fonctionne dans un mode de fonctionnement restreint Le fait d'appuyer sur l'une des touches du cache déclenche alors l'appel automatique d'un numéro mémorisé dans le téléphone.

Un but de l'invention est de proposer un équipement téléphonique ayant un mode de fonctionnement restreint et une ergonomie améliorée en mode de fonctionnement restreint.

Ce but est atteint avec l'équipement téléphonique selon la revendication 1 de la présente demande.

L'équipement électronique selon la revendication 1 utilise un verrouillage du type de celui décrit dans le brevet américain US4,945,556 pour un mode de fonctionnement restreint du type de celui décrit dans la demande européenne de brevet EP0354367. De plus il comporte un dispositif de masquage en forme de boîtier destiné à contenir le téléphone en mode de fonctionnement restreint. Cela permet d'améliorer la résistance physique de l'équipement téléphonique en cas de choc. Ceci est particulièrement avantageux lorsque le mode de fonctionnement restreint est destiné à être utilisé par un enfant.

Avantageusement, au moins une touche apparente dudit dispositif de masquage est dotée de moyens de fixation pour permettre à un utilisateur de fixer une étiquette sur ladite touche apparente.

Ainsi, une telle étiquette porte par exemple un pictogramme, une photographie ou un libellé choisi par l'utilisateur, ce qui permet de personnaliser et de simplifier l'interface homme-machine de l'équipement. Lorsque le dispositif est utilisé pour transformer un téléphone en téléphone pour enfant, ce dispositif est par exemple doté de deux touches apparentes l'une correspondant au numéro de téléphone de Maman, et l'autre à celui de Papa, et on fixe sur ces touches la photographie de Maman et celle de Papa.

L'invention sera mieux comprise et d'autres détails apparaîtront dans la description qui va suivre en regard des dessins annexés qui sont donnés à titre d'exemple non limitatif et dans lesquels:
- la figure 1 représente de façon schématique un exemple de téléphone et de dispositif destiné à s'adapter sur ce téléphone,
- la figure 2 est une vue en coupe du téléphone et du dispositif représentés sur la figure 1,
- la figure 3 représente un exemple de boîtier selon l'invention,
- la figure 4 représente un organigramme décrivant les opérations à effectuer pour passer d'un mode de fonctionnement normal à un mode de fonctionnement restreint.

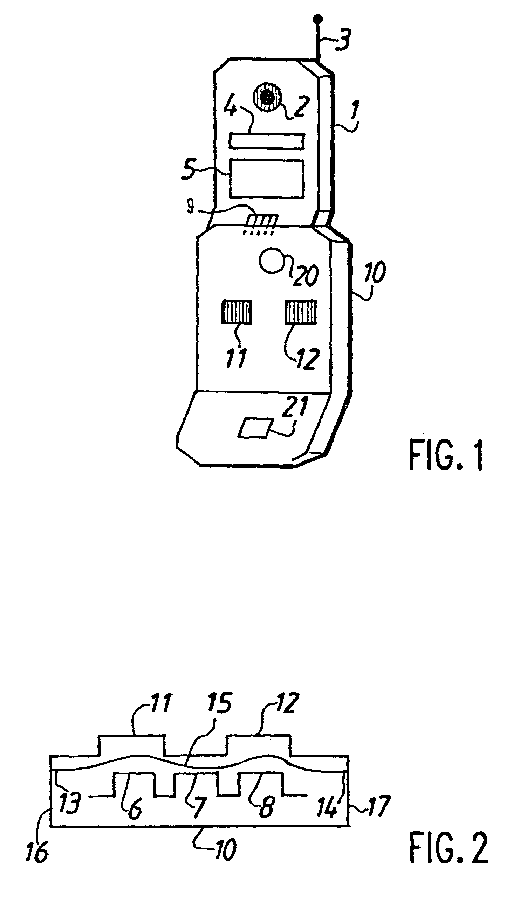

Sur la figure 1, on a représenté un exemple de téléphone 1 selon l'invention. Ce téléphone est un téléphone mobile: il est doté d'un haut parleur/écouteur 2, d'une antenne 3, d'un écran 4, d'un clavier 5 et d'un micro 9. On a également représenté sur cette figure un boîtier 10 qui dans cet exemple de réalisation est doté de deux touches, dites touches apparentes, et référencées 11 et 12. Ce boîtier 10 est également doté de deux ouvertures 20 et 21 destinées à se situer en regard du haut parleur/écouteur 2 et du micro 9 lorsque le téléphone est en place dans le boîtier.

Les formes de ce téléphone et de ce boîtier sont prévues pour que le téléphone soit susceptible de se loger dans le boîtier.

Dans un mode de réalisation particulièrement avantageux, un tel boîtier est réalisé dans une matière résistant aux chocs. Ce mode de réalisation permet d'assurer la protection physique du téléphone.

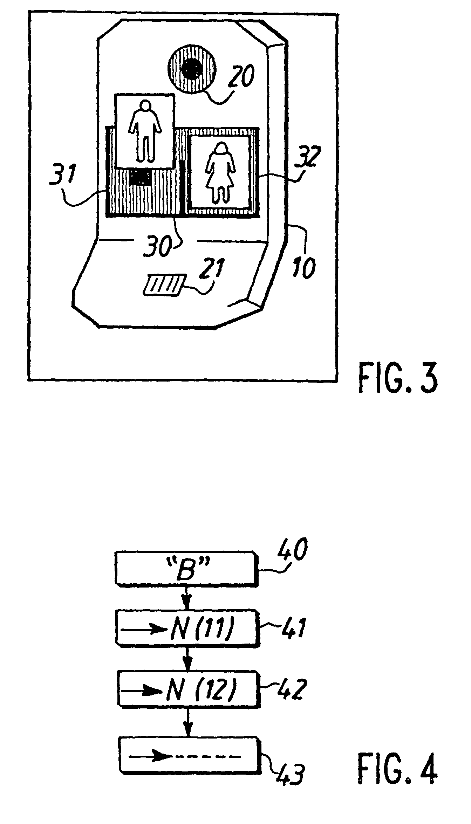

Sur la figure 2, on a représenté une coupe d'un ensemble téléphone plus boîtier, lorsque le téléphone est à l'intérieur du boîtier. Sur cette coupe apparaissent trois touches référencées 6, 7 et 8 d'une rangée du clavier 5. Ces touches sont appelées touches cachées puisque, dans cette position, elles ne sont pas directement accessibles à l'utilisateur. La touche cachée 6 se situe en dessous de la touche apparente 11, et la touche cachée 8 se situe en dessous de la touche apparente 12. Les extrémités 13 et 14 d'une lamelle métallique 15 sont respectivement collées sur le bord 16 et sur le bord 17 du boitier 10, sous les touches apparentes 11 et 12. Ainsi, lorsque l'utilisateur appuie sur l'une des deux touches apparentes, la lamelle va appuyer sur la touche cachée qui se situe en dessous de cette touche apparente. Cette lamelle joue ensuite le rôle d'un ressort pour remonter les touches apparentes.

Sur la figure 3, on a représenté un exemple de boîtier sur lequel on a collé, au dessus des touches apparentes, un étui 30 en matière plastique transparente. Cet étui est composé de deux compartiments 31 et 32 centrés sur les touches apparentes 11 et 12. Dans chacun de ces compartiments, une étiquette est susceptible d'être glissée. Cette étiquette porte par exemple un pictogramme, une photographie ou un libellé. Ce mode de réalisation permet de simplifier et de personnaliser l'interface homme-machine du téléphone.

Conformément à l'invention, le téléphone comporte des moyens pour passer d'un mode de fonctionnement normal à un mode de fonctionnement restreint et réciproquement. En mode de fonctionnement restreint, le fonctionnement de certaines touches est désactivé, et la fonction attribuée à certaines autres touches (appelées touches pré-programmées) est modifiée.

Lorsque le téléphone concerné est un téléphone à écran doté d'un menu de gestion du téléphone, on prévoit par exemple dans ledit menu une rubrique spécifique "blocage" qui contient par exemple les options suivantes:
- blocage
   → saisie d'un premier numéro de téléphone pour la touche 11,
   → saisie d'un second numéro de téléphone pour la touche 12,
   → saisie d'un code secret.

Lorsque le téléphone n'a pas d'écran, ces opérations sont par exemple réalisées par des combinaisons d'appuis touches.

Sur la figure 4, on a représenté à titre d'exemple un organigramme qui donne un exemple des opérations à effectuer pour passer d'un mode de fonctionnement normal à un mode de fonctionnement restreint.

A l'étape 40, l'utilisateur sélectionne la rubrique "blocage" ce qui symbolisé par la légende "B" sur la figure 4. A l'étape 41, il saisit le numéro de téléphone N(11) associé à la touche apparente 11, par exemple le numéro de téléphone de Maman. A l'étape 42, il saisit le numéro de téléphone N(12) associé à la touche apparente 12, par exemple le numéro de téléphone de Papa. Puis, à l'étape 43 il saisit son numéro de code secret.

Le téléphone passe alors en mode de fonctionnement restreint. Les seules opérations autorisées sont de presser l'une des touches apparentes ou l'une des touches cachées qui leur correspondent, ou de saisir le code secret permettant de revenir en fonctionnement normal.

L'invention telle qu'elle vient d'être décrite est avantageusement mise en oeuvre dans un téléphone sous forme logicielle.

Il va de soi que des modifications peuvent être apportées aux modes de réalisation qui viennent d'être décrits, notamment par substitution de moyens techniques équivalents, sans que l'on sorte pour cela du cadre de la présente invention.

L'invention n'est en particulier pas limitée aux téléphones mobiles, même si elle présente des applications particulièrement avantageuses dans ce cas.

De plus le dispositif selon l'invention qui est susceptible d'être adapté sur un téléphone pour modifier le nombre de touches accessibles à l'utilisateur n'est pas nécessairement doté de touches apparentes qui lui sont propres. Dans un autre exemple de réalisation, un tel dispositif est par exemple susceptible d'être doté d'ouvertures donnant directement accès aux touches qui se situent sur le clavier du téléphone. Toutefois ce mode de réalisation est moins avantageux dans la mesure où il ne permet pas de modifier l'indication portée par la touche.

Par ailleurs les nouvelles fonctions attribuées à une touche du téléphone ne sont pas obligatoirement un numéro de téléphone pré-programmé.

Enfin, on a décrit un clavier classique doté de touches traditionnelles. Il va de soi que l'invention s'applique également lorsque le clavier est constitué par un écran tactile.

## Revendications

1. Equipement téléphonique comportant:
- un téléphone (1) doté d'un clavier à touches (5), et susceptible de fonctionner selon un mode de fonctionnement restreint,
- des moyens pour associer un code secret audit mode de fonctionnement restreint,
- des moyens pour rendre le passage du mode de fonctionnement restreint au mode de fonctionnement normal tributaire de la saisie préalable dudit code secret,
**caractérisé en ce que** :
- dans ledit mode de fonctionnement restreint au moins une fonction pré-programmée est attribuée à au moins une desdites touches (6, 8), dite touche pré-progammée, et le fonctionnement des autres touches est désactivé, et
- ledit équipement comporte un boîtier (10) destiné à contenir ledit téléphone lorsque ledit téléphone est utilisé en mode de fonctionnement restreint, ledit boîtier comportant un dispositif de masquage du clavier dudit téléphone, ledit dispositif de masquage comprenant au moins une touche (11, 12), dite touche apparente, qui est associée à ladite touche pré-programmée lorsque le téléphone est placé dans ledit boîtier.

2. Equipement téléphonique selon la revendication 1, **caractérisé en ce qu'**au moins une touche apparente dudit dispositif de masquage est dotée de moyens de fixation (30,31,32) pour permettre à un utilisateur de fixer une étiquette sur ladite touche apparente.

## Patentansprüche

1. Telefonausrüstung mit:
- einem Telefon (1) mit einer Tastatur (5) und dazu in der Lage, in einer begrenzten Betriebsart zu arbeiten,
- Mitteln zur Verbindung eines Geheimkodes mit der besagten begrenzten Betriebsart,
- Mitteln, um den Übergang von der begrenzten Betriebsart zur normalen Betriebsart von der vorhergehenden Eingabe des besagten Geheimkodes abhängig zu machen,
**dadurch gekennzeichnet, dass**:
- In der besagten begrenzten Betriebsart zumindest eine vorprogrammierte Funktion einer der besagten Tasten (6, 8), den so genannten vorprogrammierten Tasten zugeteilt ist, und die Funktionsweise der anderen Tasten deaktiviert wird, und
- die besagte Ausrüstung ein Gehäuse (10) enthält, das für die Aufnahme des besagten Telefons bestimmt ist, wenn das besagte Telefon in begrenzter Betriebsart verwendet wird, während das besagte Gehäuse eine Maskierungsvorrichtung der Tastatur des besagten Telefons enthält und die besagte Maskierungsvorrichtung zumindest eine Taste (11, 12), die so genannte sichtbare Taste, enthält, die mit der besagten vorprogrammierten Taste in Verbindung ist, wenn das Telefon in das besagte Gehäuse gebracht ist.

2. Telefonausrüstung nach Anspruch 1, **dadurch gekennzeichnet, dass** zumindest eine sichtbare Taste der besagten Maskierungsvorrichtung mit Befestigungsmitteln (30, 31, 32) ausgerüstet ist, um es einem Anwender zu ermöglichen, ein Etikett auf der besagten sichtbaren Taste zu befestigen.

## Claims

1. Telephony equipment comprising:
- a telephone (1) having a keypad (5) and suitable for operating in a restricted operating mode,
- means for associating a secret code to said restricted operating mode,
- means for rendering the transition from the restricted operating mode to the normal operating mode dependent on the previous dialing of said secret code,
**characterized in that**:
- in said restricted operating mode at least one preprogrammed function is assigned to at least one of the push-buttons (6, 8), called preprogrammed button, and the operation of the other buttons is deactivated, and
- said equipment comprises a housing (10) intended to contain said telephone when said telephone is used in the restricted operating mode, said housing comprising a masking device for masking the keypad of said telephone, said masking device comprising a least one push-button (11, 12) called visible button, which is associated to said preprogrammed button when the telephone is placed in said housing.

2. Telephone equipment as claimed in claim 1, **characterized in that** at least one visible button of said masking device has fixing means (30, 31, 32) for permitting a user to attach a label to said visible button.
